# EUROPÄISCHE PATENTSCHRIFT

(11) **EP 4 474 659 B1**
(45) Veröffentlichungstag und Bekanntmachung des Hinweises auf die Patenterteilung: **26.08.2026**
(21) Anmeldenummer: 24179666.3
(22) Anmeldetag: 03.06.2024
(51) Int. Cl.: F16B 19/10

(54) **BLINDNIET MIT VERBINDUNGSKOPF**
BLIND RIVET WITH CONNECTING HEAD
RIVET AVEUGLE AVEC TÊTE DE CONNEXION

(30) Priorität: 05.06.2023 DE 202023103075 U
(43) Veröffentlichungstag der Anmeldung: 11.12.2024
(73) Patentinhaber: Böllhoff Verbindungstechnik GmbH, 33649 Bielefeld (DE)
(72) Erfinder: RABE, Thorsten, 32689 Kalletal (DE)
(74) Vertreter: HWP Intellectual Property

(56) Entgegenhaltungen:
- DE-A1- 1 400 821
- DE-T2- 69 622 953
- GB-A- 2 302 149

## Beschreibung

### 1. Gebiet der Erfindung

Die vorliegende Erfindung betrifft einen Blindniet bekannter Bauform mit einem Verbindungskopf sowie ein Bauteil mit einer Bauteilöffnung, in welcher ein derartiger Blindniet angeordnet ist.

### 2. Hintergrund der Erfindung

Ein Blindniet ist in seiner Grundkonstruktion im Stand der Technik bekannt. Der Blindniet besteht aus einem Hohlnietkörper oder auch Hülsenabschnitt genannt, und einem abbrechbaren Durchzugsdorn mit Kopf, der in diesem Hülsenabschnitt angeordnet ist. Ein Schließkopf des Blindniets wird durch ein radiales Aufweiten des Hülsenabschnitts mithilfe des Durchzugsdorns erzeugt.

Ein Blindniet dieser Bauart ist beispielsweise in der europäischen Patentanmeldung EP 2 722 535 A2 beschrieben. Der Blindniet besteht aus einem Hülsenabschnitt, an dessen einem Ende der Zugkopf des Zugdorns angeordnet ist. Gegenüber dem Zugkopf ist an dem anderen Ende des Hülsenabschnitts ein tellerartiger Rand angeordnet, der das Ende des Hülsenabschnitts bildet. Dieser tellerartige Rand dient dem Abstützen des Blindniets an einem Bauteil, nachdem der Hülsenabschnitt in einer Bauteilöffnung eingesetzt worden ist.

Abgewandt vom Hülsenabschnitt befindet sich angrenzend an den tellerartigen Rand ein Klemmkopf, der beispielsweise als Kugelkopf, Gewindestift, Gewindebuchse oder als glatter zylindrischer Stift ausgebildet ist. Der Hülsenabschnitt sowie der Klemmkopf sind mit einem Durchgangskanal ausgestattet, den der Zugdorn durchläuft.

Nach dem Einsetzen des Hülsenabschnitts in einer Bauteilöffnung eines Bauteils erzeugt eine auf den Zugdorn aufgebrachte Zugkraft die Ausbildung eines Schließkopfes durch Verformen des Hülsenabschnitts, wodurch der Blindniet in der Bauteilöffnung des Bauteils befestigt wird.

Eine weitere Ausgestaltung eines Blindniets offenbart EP 2 037 131 A1. Neben dem Hülsenabschnitt und dem abschließenden tellerartigen Rand weist der offenbarte Blindniet einen Funktionskopf auf, der mit einer radial äußeren Rändelung oder Strukturierung ausgestattet ist. Dieser Funktionskopf dient dazu, Verbindungsstrukturen, wie beispielsweise einen Kugelkopf, auf der strukturierten Oberfläche des Funktionskopfes anzuordnen und zu befestigen. Ein Nachteil ist in diesem Zusammenhang, dass die radial äußere Rändelung anfällig ist für axiale Zugkräfte am Kugelkopf. Dies führt zu einer Lockerung der Verbindung zwischen Funktionskopf und Kugelkopf.

Aus GB 2 302 149 A ist ein Blindniet zur Befestigung einer Klemme bekannt. Ein Kunststoffteil ist an den Flansch eines Blindniets angeformt und bildet so eine Klemme zur Befestigung von Rohren, Stangen, Kabeln oder Ähnlichem an einem Werkstück. Der Niet wird gesetzt, indem ein Dorn durch die rohrförmige Metallhülse gezogen wird, bis der Dorn bricht. Anschließend kann das Rohr in die Klemme eingeführt werden.

In Bezug auf den oben diskutierten Stand der Technik ist es die Aufgabe vorliegender Erfindung, eine alternative Konstruktion eines Blindniets vorzuschlagen, die eine effektive Befestigung in einer Bauteilöffnung eines Bauteils sowie eine verlässliche Verbindung eines Anbauteils gewährleistet.

### 3. Zusammenfassung der Erfindung

Die obige Aufgabe wird durch einen Blindniet gemäß Anspruch 1 sowie eine Verbindung aus Bauteil und Blindniet gemäß Anspruch 8 gelöst. Vorteilhafte Ausgestaltungen und Weiterentwicklungen gehen aus der folgenden Beschreibung, den Zeichnungen und den anhängenden Ansprüchen hervor.

Vorliegende Erfindung stellt einen Blindniet mit folgenden Merkmalen bereit: einen Hülsenabschnitt, der mit einem Zugdorn an einem Befestigungsende des Hülsenabschnitts aufweitbar ist, einen Funktionsflansch, der an einem Funktionsende des Hülsenabschnitts gegenüber dem Befestigungsende integral mit dem Hülsenabschnitt ausgebildet ist und sich radial über den Hülsenabschnitt hinaus erstreckt, und einen Verbindungskopf, der an den Funktionsflansch angeformt ist, sodass eine Verbindung zwischen dem Blindniet und einem Anbauteil herstellbar ist.

Der erfindungsgemäße Blindniet stellt eine multifunktionale Verbindungskomponente, im Speziellen eine zweiseitige Verbindungskomponente, dar. Diese multifunktionale Verbindungskomponente baut in ihrer Grundstruktur auf der bekannten Konstruktion eines Blindniets auf. Dieser Blindniet besteht aus dem genannten Hülsenabschnitt, der mithilfe eines Zugdorn aufgeweitet wird, um den Blindniet in der Öffnung eines Bauteils nicht zerstörungsfrei lösbar zu befestigen. Damit wird die bekannte Blindnietkonstruktion zum Befestigen einer Verbindungsstelle an einem Bauteil mit einer Bauteilöffnung genutzt.

Während das Befestigungsende des verformbaren Hülsenabschnitts einerseits zum Befestigen in der Bauteilöffnung dient, ist gegenüberliegend zu diesem Befestigungsende an dem Funktionsende des Hülsenabschnitts eine Kopplungsstruktur vorgesehen, die eine formschlüssige oder/und eine kombiniert form- und kraftschlüssige Verbindung zu einem Anbauteil bereitstellt. Diese Verbindungsstruktur, die beispielsweise durch einen Kugelkopf gebildet wird, ist über einen Befestigungsflansch an dem Hülsenabschnitt angeformt.

Während bekannte Blindnietkonstruktionen eine trennende Teller- oder Kragenkonstruktion zwischen dem Hülsenabschnitt und dem auf der Zugdornseite angeordneten Verbindungsabschnitt aufweisen, zeichnet sich der erfindungsgemäße Hülsenabschnitt durch einen integral ausgebildeten Funktionsflansch aus. Dieser Funktionsflansch ist am gegenüberliegenden Ende des Hülsenabschnitts in Bezug auf das Befestigungsende angeordnet. Aufgrund seiner Struktur, die sich radial über den Hülsenabschnitt hinaus erstreckt, lässt sich ein Verbindungskopf an dem Funktionsflansch anformen.

Anformen bedeutet in diesem Zusammenhang, dass der Verbindungskopf in einem anderen Material als dem des Hülsenabschnitts ausgebildet ist. Zudem umschließt vorzugsweise zumindest teilweise das Material des Verbindungskopfes den Funktionsflansch derart, dass der Verbindungskopf fest an dem Funktionsflansch angeordnet ist. Eine derartige Anordnung eines Verbindungskopfes an dem Funktionsflansch erreicht man vorzugsweise durch ein Spritzgussverfahren, ein Klebeverfahren, ein Tauch- und Aushärteverfahren oder Ähnliches.

Gemäß einer bevorzugten Ausgestaltung hat der Verbindungskopf eine kugelähnliche Gestalt, wie zum Beispiel eine vollständige Kugel oder eine Halbkugel oder eine Teilkugel, sodass ein Anbauteil ausgestattet mit einer Kugelpfanne auf diesen Verbindungskopf aufgeschnappt werden kann. Ob eine derartige Verbindung lösbar ist oder nicht hängt von der Gestaltung und Materialwahl des Anbauteils und im Speziellen der dort integrierten Kugelpfanne ab.

Gemäß einer weiteren bevorzugten Ausführungsform des Blindniets ist der Funktionsflansch scheibenartig ausgebildet und bildet dadurch einen axialen Hinterschnitt in einer Längsrichtung des Hülsenabschnitts.

Erfindungsgemäß bevorzugt hat der Funktionsflansch eine Ausgestaltung ähnlich einer Scheibe, die integral an dem Funktionsende des Hülsenabschnitts ausgebildet ist. Unabhängig von der Form des Funktionsflansches ist eine zentrale Öffnung im Funktionsflansch vorgesehen, durch welche sich der Zugdorn des Blindniets erstreckt. Der Funktionsflansch erstreckt sich aufgrund seiner scheibenartigen Ausgestaltung radial über den äußeren Rand des Hülsenabschnitts hinaus. Dadurch bilden bevorzugt der Hülsenabschnitt und der Funktionsflansch in einer seitlichen Ansicht eine T-förmige Struktur.

Aufgrund der bevorzugten radialen Erstreckung des Funktionsflansches über die radiale Grenze des Hülsenabschnitts hinaus bildet der Funktionsflansch vorzugsweise eine Anlagefläche für ein Bauteil, sobald der Hülsenabschnitt in einer Bauteilöffnung des Bauteils eingesteckt worden ist. Diese Anlagefläche des Funktionsflansches stellt gleichzeitig einen axialen Hinterschnitt der Kombination aus Hülsenabschnitt und Funktionsflansch dar. Aufgrund dieses axialen Hinterschnitts wird der Hülsenabschnitt mit Funktionsflansch und somit der Blindniet in der Bauteilöffnung formschlüssig gehalten, bevor der Zugdorn den Hülsenabschnitt innerhalb der Bauteilöffnung radial aufweitet und den Blindniet befestigt. Nach dem radialen Aufweiten des Hülsenabschnitts mithilfe des Zugdorn wird der Blindniet in der Bauteilöffnung gehalten, indem zumindest ein Teil des Randes der Bauteilöffnung zwischen dem Funktionsflansch und dem aufgeweiteten Befestigungsende des Hülsenabschnitts geklemmt wird.

Vorzugsweise ist der Funktionsflansch des Blindniets in axialer Richtung des Hülsenabschnitts pilzförmig ausgebildet und verjüngt sich in Richtung Befestigungsende des Hülsenabschnitts.

Wie oben bereits angesprochen worden ist, ist der Verbindungskopf an den Funktionsflansch des Blindniets angeformt. Das Anformen hat zur Folge, dass der Verbindungskopf den Funktionsflansch zumindest an seinen radialen Außenseiten sowie an der Seite abgewandt vom Hülsenabschnitt umgibt. Diese vom Hülsenabschnitt abgewandte Seite hat lediglich die angesprochene Öffnung, um den Zugdorn zum Befestigen des Blindniets bereitzustellen. Da sich der Funktionsflansch in axialer Richtung zum Hülsenabschnitt verjüngt, bildet die Verbindung aus Funktionsflansch und Verbindungskopf eine formschlüssige Verbindung. Denn das Abziehen des Verbindungskopfs in abgewandter Richtung vom Hülsenabschnitt würde aufgrund der pilzförmigen Ausgestaltung des Funktionsflansches und seiner Verjüngung dazu führen, dass der Verbindungskopf radial aufgeweitet werden müsste. Da eine derartige radiale Aufweitung mit zusätzlichen mechanischen Spannungen und aufzubringender Energie verbunden ist, sorgt die bevorzugte pilzförmige Ausgestaltung für einen stabilen und sicheren Halt des Verbindungskopfes auf dem Funktionsflansch.

Gemäß einer weiteren bevorzugten Ausgestaltung des Blindniets ist der scheibenartige Funktionsflansch umfänglich vollständig durch den Verbindungskopf aus Kunststoff umgeben.

Gemäß einer bevorzugten Ausgestaltung vorliegender Erfindung wird der Verbindungskopf an den Funktionsflansch angespritzt. Ein derartiger Anspritzprozess ist allgemein im Stand der Technik bekannt. Dieser führt bevorzugt dazu, dass der Funktionsflansch vollständig von dem Verbindungskopf eingeschlossen ist. Einzige Ausnahme bildet die Austrittsöffnung des Zugdorns an der hülsenabgewandten Seite des Verbindungskopfes. Eine weitere Ausnahme bildet die Seite des Funktionsflansches, die dem Hülsenabschnitt zugewandt ist.

Gemäß einer bevorzugten Ausgestaltung vorliegender Erfindung hat der Funktionsflansch eine dem Hülsenabschnitt zugewandte Anlageseite, die annähernd senkrecht zum Hülsenabschnitt ausgerichtet ist. Diese Anlageseite dient beim Befestigen des Blindniets in einer Bauteilöffnung bevorzugt als Kontaktfläche zu dem Bauteil, in dem die Bauteilöffnung angeordnet ist.

Erfindungsgemäß bevorzugt weist der Verbindungskopf eine Befestigungsseite auf, die dem Befestigungsende des Hülsenabschnitts zugewandt ist und von der mindestens eine um den Hülsenabschnitt umlaufende und axial über den Funktionsflansch hinaus stehende Präge- oder Dichtrippe vorragt.

Erfindungsgemäß bevorzugt weist der Verbindungskopf die Befestigungsseite auf, die fluchtend mit der Anlageseite des Funktionsflansches angeordnet ist. Dies führt bevorzugt dazu, dass die Befestigungsseite des Verbindungskopfes und die Anlageseite des Funktionsflansches gemeinsam an dem Bauteil benachbart zur Bauteilöffnung anliegen, sobald der Blindniet in der Bauteilöffnung befestigt worden ist. In diesem Zusammenhang hat die Anlagefläche den bevorzugten Vorteil, dass eine Block-Verbindung zwischen dem Funktionsflansch und dem Bauteil mit Bauteilöffnung gebildet wird.

Die an das Bauteil angrenzende Befestigungsseite des Verbindungskopfes besteht vorzugsweise aus Kunststoff. Um neben der festen Verbindung zwischen Blindniet und Bauteil auch für eine Abdichtung zwischen der Bauteilöffnung und dem darin angeordneten Blindniet zu sorgen, ist vorzugsweise umlaufend um den Hülsenabschnitt an der Befestigungsseite des Verbindungskopfes eine Präge- oder Dichtrippe vorgesehen. Diese Präge- oder Dichtrippe steht aus der Befestigungsseite vor und überragt ebenfalls bevorzugt die Anlageseite des Funktionsflansches in Richtung des Hülsenabschnitts. Diese Konstruktion führt dazu, dass beim Befestigen des Blindniets in der Bauteilöffnung die Präge- oder Dichtrippe an der anliegenden Bauteiloberfläche mit Bauteilöffnung derart komprimiert wird, dass auf diese Weise eine Dichtfunktion realisiert wird.

In einer weiteren bevorzugten Ausgestaltung des erfindungsgemäßen Blindniets ist dessen Verbindungskopf ähnlich einem Doppelkegel ausgebildet mit einem Befestigungskegel und einem Verbindungskegel verbunden über einen verjüngten Halsbereich.

Um den Verbindungskopf multifunktional nutzen zu können ist dieser gemäß einer bevorzugten Ausgestaltung vorliegender Erfindung als Doppelkegel ausgebildet. Dieser Doppelkegel eröffnet die Möglichkeit, dass ein kugelähnlicher Kopf bzw. ein Verbindungskegel in hülsenabgewandter Richtung angeordnet ist. Dieser Verbindungskegel dient dazu, beispielsweise eine Kugelpfanne oder eine kugelähnliche Pfanne auf diesem Verbindungskegel zu befestigen, vorzugsweise Aufzuschnappen.

Angrenzend an den Hülsenabschnitt und den Funktionsflansch ist ein Befestigungskegel vorgesehen. Der Befestigungskegel und der Verbindungskegel sind über einen sich verjüngenden Halsbereich miteinander verbunden. Vorzugsweise bildet der Doppelkegel eine integrale Struktur aus Verbindungskegel und Befestigungskegel mit dazwischenliegendem Halsbereich. Der bevorzugte Befestigungskegel sorgt dafür, dass er sich beginnend am Halsbereich in axialer Richtung zum Hülsenabschnitt radial aufweitet. Damit stellt der Befestigungskegel neben der Befestigungsfläche angrenzend an das Bauteil mit Bauteilöffnung eine schräg verlaufende Anlagefläche für das Anbauteil bereit, welches mit dem Verbindungskegel verbunden worden ist. Die sich radial aufweitende Form des Befestigungskegels hemmt vorzugsweise ein zu weites Aufschieben des Anbauteils auf den Verbindungskegel.

Vorzugsweise steht der Befestigungskegel radial über den Funktionsflansch hinaus und der Verbindungkegel weist einen kugelförmigen Kupplungskopf auf.

Erfindungsgemäß weist der Funktionsflansch des Blindniets in axialer Richtung zumindest eine Stufe auf, die eine in Richtung Befestigungsende des Hülsenabschnitts ausgerichtete Haltefläche bereitstellt, die bevorzugt eine Verzahnung aufweist.

Um die Verbindung zwischen dem Verbindungskopf und dem Funktionsflansch zu stärken, weist der Funktionsflansch in Richtung des Hülsenabschnitts eine radial einwärts versetzte Stufe auf. Gemäß einer bevorzugten Ausgestaltung besteht der Funktionsflansch aus zwei übereinander angeordneten und integral verbundenen Scheiben mit unterschiedlichem Durchmesser, wobei die an den Hülsenabschnitt angrenzende Scheibe einen kleineren Durchmesser aufweist als die an den Verbindungskopf angrenzende Scheibe. Dies führt dazu, dass die dem Hülsenabschnitt abgewandte Scheibe die unmittelbar angrenzende Scheibe überragt und dadurch einen axialen Hinterschnitt des Funktionsflansches ausbildet. Dieser axiale Hinterschnitt unterstützt beispielsweise einen Halt des Verbindungskopfes auf dem Funktionsflansch, wenn dieser durch Zugkräfte in vom Hülsenabschnitt abgewandter Richtung belastet wird.

Gemäß einer weiteren bevorzugten Ausgestaltung sind an diesem axialen Hinterschnitt Verzahnungen vorgesehen, die in Richtung Hülsenabschnitt aus der Stufenfläche hervorragen. Diese Verzahnung hat den bevorzugten Vorteil, dass sie den Verbindungskopf gegen Verdrehen am Funktionsflansch halten.

Vorliegende Erfindung offenbart zudem ein Bauteil, insbesondere ein Karosserie- oder ein Fahrgestellbauteil eines Kraftfahrzeugs, mit einer Bauteilöffnung, in der der Blindniet gemäß mindestens einer der oben beschriebenen Ausgestaltungen angeordnet ist.

Erfindungsgemäß bevorzugt ist an dem Verbindungskopf des Blindniets ein Anbauteil angeordnet ist.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen gleiche Bauteile und/oder Elemente. Es zeigen:
- Figur 1: eine perspektivische Ansicht einer bevorzugten Ausführungsform des erfindungsgemäßen Blindniets mit Verbindungskopf im ungesetzten Zustand,
- Figur 2: eine Seitenansicht einer bevorzugten Ausführungsform des erfindungsgemäßen Blindniets mit Verbindungskopf im ungesetzten Zustand,
- Figur 3: eine bevorzugte Ausgestaltung des erfindungsgemäßen Blindniets mit Verbindungskopf in einer seitlichen Schnittansicht im ungesetzten Zustand,
- Figur 4: eine axiale Ansicht des Blindniets mit Verbindungskopf gemäß Figur 3 aus Richtung des Hülsenabschnitts,
- Figur 5: eine bevorzugte vergrößerte Ansicht des Hülsenabschnitts mit Funktionsflansch ohne Verbindungskopf in einer seitlichen Darstellung,
- Figur 6: eine bevorzugte Ausführungsform des Blindniets in einem ungesetzten Zustand ohne erfindungsgemäß bevorzugten Verbindungskopf,
- Figur 7: eine perspektivische Ansicht des Blindniets im ungesetzten Zustand ohne Verbindungskopf,
- Figur 8: eine schematische Ansicht des erfindungsgemäßen Blindniets angeordnet in einer Bauteilöffnung eines Bauteils mit einem Anbauteil befestigt an dem Verbindungskopf und
- Figur 9: eine schematische Ansicht des erfindungsgemäßen Blindniets gesetzt in einer Bauteilöffnung eines Bauteils mit einem Anbauteil befestigt an dem Verbindungskopf.

### 5. Detaillierte Beschreibung der bevorzugten Ausführungsformen

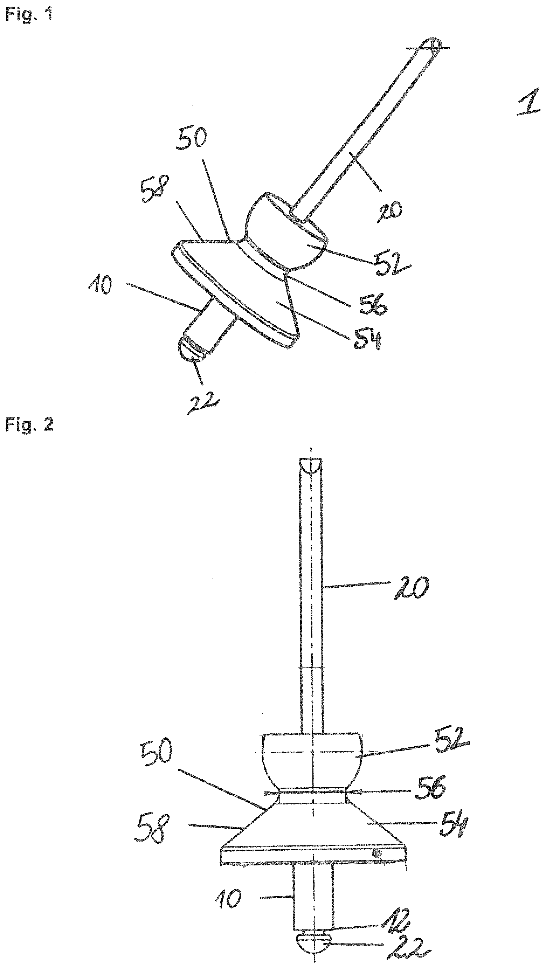

Eine perspektivische Darstellung einer bevorzugten Ausführungsform des erfindungsgemäßen Blindniets 1 zeigt Figur 1. Der Blindniet 1 ist im ungesetzten Zustand schematisch dargestellt. Das bedeutet, ein Hülsenabschnitt 10 ist nicht in einer Bauteilöffnung O eines Bauteils B angeordnet und dort ausgeweitet.

In dem hohlzylindrisch ausgebildeten Hülsenabschnitt 10 ist ein Zugdorn 20 axial verschiebbar angeordnet. Der Zugdorn 20 weist an einem Ende angrenzend an den Hülsenabschnitt 10 einen Zugkopf 22 auf. Der Zugkopf 22 hat einen Außendurchmesser, der größer ausgebildet ist als ein Innendurchmesser eines Durchgangskanals des Hülsenabschnitts 10. Wird der Zugkopf 22 mithilfe des Zugdorn 20 in den Hülsenabschnitt 10 gezogen, wird dadurch der Hülsenabschnitt 10 radial ausgeweitet und ein Schließkopf 16 gebildet.

Der Zugkopf 22 wird zum Befestigen des Blindniets 1 in der Bauteilöffnung O in ein Befestigungsende 12 des Hülsenabschnitts 10 hineingezogen. Der Hülsenabschnitt 10 ist mit einem Verbindungskopf 50 verbunden. Der Verbindungskopf 50 ist angepasst, um eine Verbindung mit einem Anbauteil A, beispielsweise eine Fahrzeugleuchte, ein Verkleidungsteil, eine Innenverkleidung oder ein Dämmteil, herzustellen.

Um diese Funktion auszuführen, weist der Verbindungskopf 50 zumindest in axial abgewandter Richtung vom Hülsenabschnitt 10 einen Kupplungskopf 52 auf. Der Kupplungskopf 52 ist vorzugsweise kugelförmig, halbkugelförmig, ellipsoidal, kegelförmig oder kegelstumpfförmig ausgebildet.

Gemäß einer bevorzugten Ausführungsform vorliegender Erfindung ist der Verbindungskopf 50 mit dem Hülsenabschnitt 10 fest verbunden. Dazu weist der Hülsenabschnitt 10 einen Funktionsflansch 30 auf, der integral mit dem Hülsenabschnitt 10 an einem Funktionsendes 14 des Hülsenabschnitts 10 ausgebildet ist.

Vorzugsweise ist der Verbindungskopf 50 an den Funktionsflansch 30 angespritzt, vorzugsweise mit einem gängigen Spritzgussverfahren.

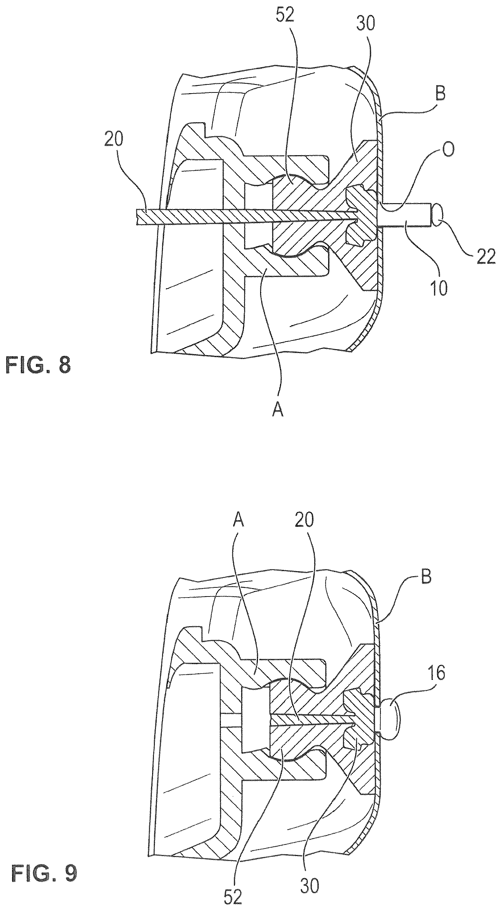

Zur Herstellung der Verbindung zwischen dem Kupplungskopf 52 und dem Anbauteil A schnappt der Kupplungskopf 52 bevorzugt in eine Kugelpfanne oder eine ähnliche Konstruktion am Anbauteil A ein. Zuvor wurde der Hülsenabschnitt 10 durch Ziehen des Zugkopfes 22 in Richtung Verbindungskopf 50 aufgeweitet, damit in der Bauteilöffnung O befestigt und der Zugdorn 20 aus dem Hülsenabschnitt 10 entfernt. Entsprechend ist der Kupplungskopf 52 frei, um mit dem Anbauteil A verbunden zu werden (siehe Fig. 9).

Gemäß einer bevorzugten Ausgestaltung vorliegender Erfindung weist der Verbindungskopf 50 lediglich einen Kupplungskopf 52 auf (siehe oben), der an den Funktionsflansch 30 angeformt ist. Der Kupplungskopf 52 ist ausreichend, um eine Verbindung mit dem Anbauteil A herzustellen. Eine mechanisch belastbare und verlässliche Befestigung des Kupplungskopfes 50 wird durch sein Anformen oder Anspritzen an den unten näher beschriebenen Funktionsflansch 30 gewährleistet.

Gemäß einer bevorzugten Ausführungsform vorliegender Erfindung weist der Verbindungskopf 50 die Form eines Doppelkegels auf, wie es beispielgebend in den Figuren 1-3 gezeigt ist. Der Doppelkegel wird durch einen Befestigungskegel 54 und einen Verbindungskegel, vorzugsweise der Kupplungskopf 52, gebildet. Der Befestigungskegel 54 und der Verbindungskegel 52 sind über einen Halsbereich 56 miteinander verbunden. Vorzugsweise verjüngen sich der Kupplungskopf 52 und der Befestigungskegel 54 aufeinanderzulaufend in Richtung des Halsbereichs 56.

Bevorzugt stellt der Befestigungskegel 54 eine umlaufende radial äußere Mantelfläche 58 bereit. Vorzugsweise dient die Mantelfläche 58 als Stützfläche für ein auf dem Kupplungskopf 52 angeordnetes Anbauteil A. Die sich radial aufweitende Gestalt des Befestigungskegels 54 in Richtung Hülsenabschnitt 10 verhindert bevorzugt, dass das Anbauteil A zu weit auf den Kupplungskopf 52 aufgeschoben werden kann. Zudem werden ebenfalls bevorzugt über die Mantelfläche 58 und den Befestigungskegel 54 Stützkräfte des Anbauteils A in das am Hülsenabschnitt 10 befestigte Bauteil B abgeleitet.

Der bevorzugte Doppelkegel des Verbindungskopfes 50 endet angrenzend an den Hülsenabschnitt 10 vorzugsweise in einer Befestigungsseite 60. Mit anderen Worten ausgedrückt wird der Befestigungskegel 54 in Richtung Hülsenabschnitt 10 durch die Befestigungsseite 60 begrenzt.

Die Befestigungsseite 60 ist gemäß einer bevorzugten Ausgestaltung vorliegender Erfindung quer, insbesondere senkrecht, zum Hülsenabschnitt 10 angeordnet. Die Befestigungsseite 60 bildet eine Anlagefläche an dem Bauteil B, nachdem der Blindniet 1 in der Bauteilöffnung O befestigt worden ist.

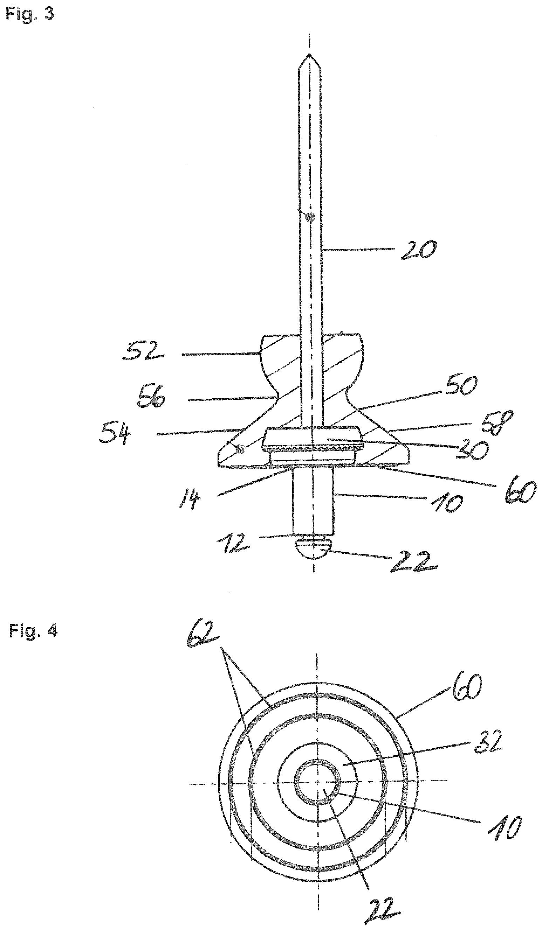

Figur 4 zeigt eine bevorzugte Ausführungsform der Befestigungsseite 60. Diese entspricht einer Ansicht des Blindniets 1 aus Figur 3 in axialer Richtung ausgehend von dem Hülsenabschnitt 10. Im Zentrum der Befestigungsfläche 60 in Figur 4 erkennt man den Zugkopf 22 und die diesen umlaufende Wand des Hülsenabschnitts 10.

In Richtung radial auswärts schließt sich an den Hülsenabschnitt 10 eine Anlagefläche 32 des Funktionsflansches 30 an. Diese ist vorzugsweise ringförmig ausgebildet. Es ist ebenfalls bevorzugt, den Funktionsflansch 30 und damit auch die Anlagefläche 32 unrund, insbesondere elliptisch oder mehreckig, auszubilden. Die Anlagefläche 32 bildet vorzugsweise einen direkten Kontakt zwischen Funktionsflansch 30 und Bauteil B, nachdem der Blindniet 1 in der Bauteilöffnung O befestigt worden ist. Auf diese Weise wird ebenfalls bevorzugt eine Verbindung auf Block zwischen dem Funktionsflansch 30, also dem Blindniet 1, und dem Bauteil B realisiert.

Die Anlagefläche 60 erstreckt sich in einer Ringfläche um die Anlagefläche 32. Die Anlagefläche 60, die durch den Verbindungskopf 50 realisiert wird, weist eine oder eine Mehrzahl von Präge- und/oder Dichtrippen 62 auf. Die Präge- oder Dichtrippen 62 erstrecken sich umlaufend, vorzugsweise kreisförmig umlaufend, um die Anlagefläche 32 des Funktionsflansches 30. Die Präge- oder Dichtrippen 62 ragen in Richtung des Hülsenabschnitts 10 axial aus der Befestigungsseite 60 vor. Ebenfalls bevorzugt ragen die Präge- oder Dichtrippen 62 axial über die Anlagefläche 32 des Funktionsflansches 30 hinaus.

Gemäß einer weiteren bevorzugten Ausgestaltung verlaufen die Prägerippen 62 in radialer Richtung auf der Anlagefläche 60.

Wird der Blindniet 1 an dem Bauteil B befestigt, werden die Präge- oder Dichtrippen 62 bevorzugt gegen das Bauteil B gedrückt. Auf diese Weise üben die Präge- oder Dichtrippen 62 eine Dichtfunktion zwischen dem Blindniet 1 mit Verbindungskopf 50 und dessen Befestigungsseite 60 und dem Bauteil B aus.

Weiter bevorzugt prägen sich die Prägerippe 62 in die Oberfläche des Bauteils B ein. Auf diese Weise wird die Verbindung zwischen Blindniet 1 und Bauteil B stabilisiert, vorzugsweise gegen eine Relativbewegung zwischen Verbindungskopf 50 und Bauteil B.

Gemäß einer bevorzugten Ausführungsform vorliegender Erfindung besteht der Verbindungskopf 50 aus Kunststoff. Dieser Kunststoff wird mithilfe eines bekannten Spritzgussverfahrens an dem Funktionsflansch 30 angeformt. Gemäß einer bevorzugten Ausgestaltung vorliegender Erfindung besteht der Verbindungskopf 50 aus Polyamid mit einem Glasfaseranteil von über 50 %. Es sind ebenfalls andere Kunststoffe mit ähnlichen Eigenschaften einsetzbar.

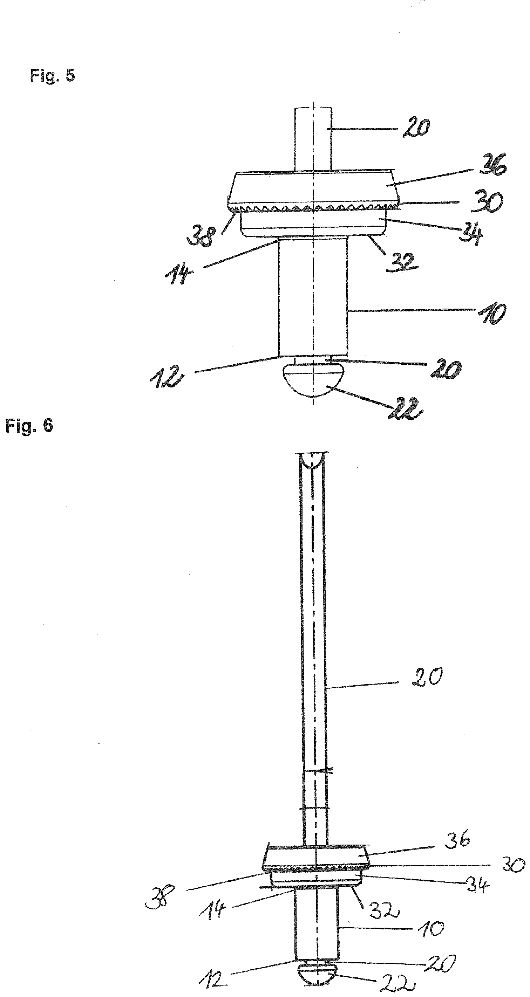

Der den Verbindungskopf 50 oder Doppelkegel tragende Funktionsflansch 30 ist integral mit dem Hülsenabschnitt 10 verbunden und vergrößert in Figur 5 dargestellt. Erfindungsgemäß bevorzugt hat der Funktionsflansch 30 eine in der Seitenansicht von Figur 5 erkennbare T-förmige Gestalt gemeinsam mit dem Hülsenabschnitt 10.

Weiter bevorzugt ist der Funktionsflansch 30 pilzförmig ausgebildet. Das bedeutet, dass der Funktionsflansch 30 in Richtung Hülsenabschnitt 10 eine geringere laterale Ausdehnung aufweist als in axialer Richtung abgewandt vom Hülsenabschnitt 10.

Es ist ebenfalls bevorzugt, dass der Funktionsflansch 30 aus zwei integral miteinander verbundenen Scheiben 34, 36 besteht. Die dem Hülsenabschnitt 10 zugewandte Scheibe 34 weist einen geringeren Durchmesser auf als die vom Hülsenabschnitt 10 abgewandte Scheibe 36. Aufgrund der bevorzugten Unterschiede der Scheiben 34, 36 in der lateralen Ausdehnung oder im Durchmesser entsteht ein Hinterschnitt 38 oder eine Stufe in Richtung der Längsachse des Hülsenabschnitts 10.

Der bevorzugte axiale Hinterschnitt 38 unterstützt und stärkt die formschlüssige Verbindung zwischen Funktionsflansch 30 und dem Verbindungskopf 50. Wird beispielsweise versucht, eine Schnappverbindung zwischen dem Anbauteil A und dem Kupplungskopf 52 durch axialen Zug in abgewandter Richtung von dem Hülsenabschnitt 10 zu lösen, dann findet der Verbindungskopf 50 zusätzlichen Halt an dem axialen Hinterschnitt 38.

Gemäß einer weiteren Ausgestaltung vorliegender Erfindung sind an der Fläche des axialen Hinterschnitt 38 axial vorstehende Verzahnungen 40 oder eine Rändelung vorgesehen. Diese Verzahnung 40 greift bevorzugt in den Verbindungskopf 50 ein. Auf diese Weise realisiert die Verzahnung 40 eine Verdrehsicherung zwischen dem Funktionsflansch 30 und dem Verbindungskopf 50.

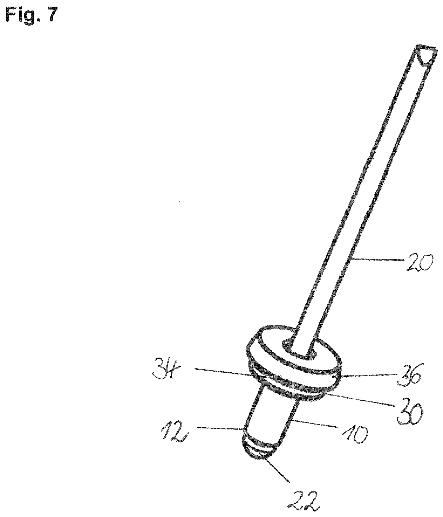

Figur 6 zeigt den bevorzugten Blindniet 1 ohne angeformten Verbindungskopf 50 in einer Seitenansicht. Figur 7 zeigt den bevorzugten Blindniet 1 ohne angeformten Verbindungskopf 50 in einer perspektivischen Seitenansicht.

Figur 8 zeigt eine bevorzugte Vorstufe einer Befestigung des Blindniets 1 in der Bauteilöffnung O des Bauteils B. Gemäß einer hier gezeigten bevorzugten Ausgestaltung wird der Kupplungskopf 52 zunächst mit dem Anbauteil A verbunden. Nachfolgend wird der Hülsenabschnitt 10 in die Bauteilöffnung O eingesetzt. Dies setzt bevorzugt voraus, dass der Zugdorn 20 das Anbauteil A durchlaufen kann.

Es ist ebenfalls bevorzugt, den Blindniet 1 ohne Anbauteil A in der Bauteilöffnung O anzuordnen und dort zu befestigen. Danach wird dann das Anbauteil A mit dem Kupplungskopf 52 verbunden.

Zum Verbinden des Blindniets 1 mit dem Bauteil B wird der Zugdorn 20 mit Zugkraft beaufschlagt. Als Folge zieht sich der Zugkopf 22 in den Hülsenabschnitt 10 und bildet den Schließkopf 16 aus. Zudem wird bekanntermaßen danach der Zugdorn 20 abgerissen oder abgebrochen.

### 6. Bezugszeichenliste

- 1: Blindniet
- 10: Hülsenabschnitt
- 12: Befestigungsende
- 14: Funktionsendes
- 16: Schließkopf des Blindniets
- 20: Zugdorn
- 22: Zugkopf
- 30: Funktionsflansch
- 32: Anlagefläche
- 34: kleine Scheibe
- 36: große Scheibe
- 38: axialer Hinterschnitt
- 40: Verzahnung
- 50: Verbindungskopf
- 52: Kupplungskopf
- 54: Befestigungskegel
- 56: Halsbereich
- 58: Mantelfläche des Befestigungskegels
- 60: Befestigungsseite
- 62: Präge- oder Dichtrippen
- B: Bauteil
- O: Bauteilöffnung
- A: Anbauteil

## Patentansprüche

1. Ein Blindniet (1), der die folgenden Merkmale aufweist:
einen Hülsenabschnitt (10), der mit einem Zugdorn (20) an einem Befestigungsende (12) des Hülsenabschnitts (10) aufweitbar ist,
einen Funktionsflansch (30), der an einem Funktionsende (14) des Hülsenabschnitts (10) gegenüber dem Befestigungsende (12) integral mit dem Hülsenabschnitt (10) ausgebildet ist, sich radial über den Hülsenabschnitt (10) hinaus erstreckt und in axialer Richtung zumindest eine Stufe aufweist, die eine in Richtung Befestigungsende (12) des Hülsenabschnitts (10) ausgerichtete Haltefläche (38) bereitstellt, die bevorzugt eine Verzahnung (40) aufweist,
einen Verbindungskopf (50), der an den Funktionsflansch (30) angeformt ist, sodass eine Verbindung zwischen dem Blindniet (1) und einem Anbauteil (A) herstellbar ist.

2. Der Blindniet (1) gemäß Anspruch 1, dessen Funktionsflansch (30) scheibenartig ausgebildet ist und der einen axialen Hinterschnitt (38) in einer Längsrichtung des Hülsenabschnitts (10) bildet.

3. Der Blindniet (1) gemäß Anspruch 1 oder 2, dessen Funktionsflansch (30) in axialer Richtung des Hülsenabschnitts (10) pilzförmig ausgebildet ist und sich in Richtung Befestigungsende (12) des Hülsenabschnitts (10) verjüngt.

4. Der Blindniet (1) gemäß mindestens einem der vorhergehenden Ansprüche, dessen scheibenartiger Funktionsflansch (30) umfänglich vollständig durch den Verbindungskopf (50) aus Kunststoff umgeben ist.

5. Der Blindniet (1) gemäß Anspruch 4, dessen Verbindungskopf (50) eine Befestigungsseite (60) aufweist, die dem Befestigungsende (12) des Hülsenabschnitts (10) zugewandt ist und von der mindestens eine um den Hülsenabschnitt (10) umlaufende und axial über den Funktionsflansch (30) hinaus stehende Präge- oder Dichtrippe (62) vorragt.

6. Der Blindniet (1) gemäß mindestens einem der vorhergehenden Ansprüche, dessen Verbindungskopf (50) ähnlich einem Doppelkegel ausgebildet ist mit einem Befestigungskegel (54) und einem Verbindungskegel (52) verbunden über einen verjüngten Halsbereich (56).

7. Der Blindniet (1) gemäß Anspruch 6, dessen Befestigungskegel radial über den Funktionsflansch (30) hinaus steht und der Verbindungkegel (52) einen kugelförmigen Kupplungskopf aufweist.

8. Ein Bauteil (B), insbesondere ein Karosserie- oder ein Fahrgestellbauteil eines Kraftfahrzeugs, mit einer Bauteilöffnung, in der der Blindniet (1) gemäß mindestens einem der vorhergehenden Ansprüche angeordnet ist.

9. Das Bauteil (B) gemäß Anspruch 8, wobei an dem Verbindungskopf (50) des Blindniets (1) ein Anbauteil (A) angeordnet ist.

## Claims

1. A blind rivet (1) having the following features:
a sleeve section (10) which at a fastening end (12) of the sleeve section (10) is expandable with a pulling mandrel (20),
a functional flange (30) which is integrally configured with the sleeve section (10) at a functional end (14) of the sleeve section (10) opposite to the fastening end (12), which extends radially beyond the sleeve section (10), and which includes at least one step in axial direction, which provides a retention surface (38), which preferably has a gearing (40), aligned in the direction of the fastening end (12) of the sleeve section (10),
a connecting head (50) which is molded to the functional flange (30) so that a connection between the blind rivet (1) and an add-on part (A) can be established.

2. The blind rivet (1) according to claim 1, the functional flange (30) of which is formed disk-like and forms an axial undercut (38) in a longitudinal direction of the sleeve section (10).

3. The blind rivet (1) according to claim 1 or 2, the functional flange (30) of which is configured mushroom-shaped in axial direction of the sleeve section (10) and tapers in the direction of the fastening end (12) of the sleeve section (10).

4. The blind rivet (1) according to at least one of the preceding claims, the disk-like functional flange (30) of which is completely surrounded circumferentially by the connecting head (50) out of plastic material.

5. The blind rivet (1) according to claim 4, the connecting head (50) of which has a fastening side (60) which faces towards the fastening end (12) of the sleeve section (10) and from which at least one embossing or sealing rip (62) projects, which circulates the sleeve section (10) and axially projects beyond the functional flange (30).

6. The blind rivet (1) according to at least one of the preceding claims, the connecting head (50) of which is configured similar to a double cone with a fastening cone (54) and a connecting cone (52) connected via a tapered neck portion (56).

7. The blind rivet (1) according to claim 6, the fastening cone of which extends radially beyond the functional flange (30) and the connecting cone (52) has a ball-like coupling head.

8. A component (B), in particular a vehicle body component or carriage component of a motor vehicle with a component aperture in which the blind rivet (1) according to at least one of the preceding claims is arranged.

9. The component (B) according to claim 8, wherein an add-on part (A) is arranged at the connecting head (50) of the blind rivet (1).

## Revendications

1. Rivet aveugle (1) présentant les caractéristiques suivantes :
une section de douille (10) apte à être élargie au moyen d'une broche de traction (20) à une extrémité de fixation (12) de la section de douille (10),
une bride fonctionnelle (30), laquelle est conçue intégralement avec la section de douille (10) à une extrémité fonctionnelle (14) de la section de douille (10) en face de l'extrémité de fixation (12), s'étend radialement au-delà de la section de douille (10) et présente au moins un gradin dans la direction axiale, lequel fournit une surface de maintien (38) orientée vers l'extrémité de fixation (12) de la section de douille (10), laquelle présente de préférence une denture (40),
une tête de connexion (50) formée sur la bride fonctionnelle (30), de manière à réaliser une connexion entre le rivet aveugle (1) et une pièce rapportée (A).

2. Rivet aveugle (1) selon la revendication 1, dont la bride fonctionnelle (30) est conçue comme un disque et lequel forme une contre-dépouille axiale (38) dans une direction longitudinale de la section de douille (10).

3. Rivet aveugle (1) selon la revendication 1 ou 2, dont la bride fonctionnelle (30) est conçue en forme de champignon dans la direction axiale de la section de douille (10) et lequel se rétrécit dans la direction de l'extrémité de fixation (12) de la section de douille (10).

4. Rivet aveugle (1) selon l'une au moins des revendications précédentes, dont la bride fonctionnelle (30) semblable à un disque est entourée par la tête de connexion (50) en plastique sur l'ensemble de sa périphérie.

5. Rivet aveugle (1) selon la revendication 4, dont la tête de connexion (50) présente un côté de fixation (60), lequel est tourné vers l'extrémité de fixation (12) de la section de douille (10) et à partir duquel au moins une nervure de gaufrage ou d'étanchéité (62) encerclant la section de douille (10) et dépassant axialement de la bride fonctionnelle (30) fait saillie.

6. Rivet aveugle (1) selon l'une au moins des revendications précédentes, dont la tête de connexion (50) est conçue de façon similaire à un double cône, avec un cône de fixation (54) et un cône de connexion (52) reliés par une région de col rétrécie (56).

7. Rivet aveugle (1) selon la revendication 6, dont le cône de fixation s'étend radialement au-delà de la bride fonctionnelle (30) et le cône de connexion (52) présente une tête d'accouplement sphérique.

8. Élément (B), en particulier un élément de carrosserie ou de châssis d'un véhicule automobile, comportant une ouverture d'élément dans laquelle est disposé le rivet aveugle (1) selon l'une au moins des revendications précédentes.

9. Élément (B) selon la revendication 8, dans lequel une pièce rapportée (A) est disposée sur la tête de connexion (50) du rivet aveugle (1).
